**Europäisches Patentamt**

**European Patent Office**

**Office européen des brevets**

(19)

(11) Veröffentlichungsnummer: **0 014 748**

**A2**

(12) # EUROPÄISCHE PATENTANMELDUNG

(21) Anmeldenummer: **79104686.5**

(22) Anmeldetag: **24.11.79**

(51) Int. Cl.³: **B 64 C 27/33**

(30) Priorität: **31.01.79 DE 2903524**

(43) Veröffentlichungstag der Anmeldung:
**03.09.80 Patentblatt 80/18**

(84) Benannte Vertragsstaaten:
**AT BE CH FR GB IT LU NL SE**

(71) Anmelder: **Messerschmitt-Bölkow-Blohm Gesellschaft mit beschränkter Haftung
Postfach 801109
D-8000 München 80(DE)**

(72) Erfinder: **Schwarz, Alois
Ahornweg 21
D-8011 Putzbrunn(DE)**

(72) Erfinder: **Mautz, Karl-Heinz
Brenner Strasse 13
D-8012 Ottobrunn(DE)**

(72) Erfinder: **Stephan, Michael
Aurikelstrasse 6
D-8012 Ottobrun(DE)**

(54) **Rotor für ein Drehflügelflugzeug mit einem gemeinsamen Holmteil je Rotorblattpaar.**

(57) Die Erfindung betrifft einen Rotor für ein Drehflügelflugzeug mit einer geraden Anzahl von Rotorblättern (1), die am Rotorkopf (3) paarweise einander diametral gegenüberliegend je Rotorblattpaar über einen gemeinsamen, von der einen bis zur anderen Blattwurzel einstückig durchgehenden Holmteil (2) angeordnet sind, welcher sowohl hinsichtlich der Blattwinkelbewegungen torsionsweich als auch hinsichtlich der Blattschlag- und Blattschwenkbewegungen biegeweich ist. Um hierbei eine gegenseitige Beeinflussung von Blattwinkelverstellbewegungen und Blattschlag-/Blattschwenkbewegungen auszuschließen, ist erfindungsgemäß der Holmteil (2) zum einen im Rotorkopf (3) unbeweglich eingespannt und zum anderen beiderseits des Rotorkopfes jeweils mit einem Bereich (2.2) von höherer Torsionsweichheit als der übrige Holmteil sowie mit einem vom Blattflügel (1.1) aus diesen Bereich (2.2) überbrückenden, biegesteifen Träger (6) versehen. Dieser Träger ist, blattflügelseitig mit dem Holmteil (2) in drehwinkelbeweglicher Verbindung (Radialelastomerlager 7), rotorkopfseitig mit dem Holmteil (2) an einer solchen Stelle starr verbunden (Kunststofflagen 6.1), daß bis zur Einspannung des Holmteils (2) im Rotorkopf (3) noch ein biegeweicher Bereich (2.1) des Holmteils für die Blattschlag- und Blattschwenkbewegungen verbleibt.

./...

Fig. 1

Rotor für ein Drehflügelflugzeug mit einem gemeinsamen Holmteil je Rotorblattpaar

---

Die Erfindung betrifft einen Rotor gemäß dem Oberbegriff des Patentanspruchs 1.

Bei einem derartigen durch die DE-OS 27 55 557 bekannten Rotor ohne definierte Schlag- und Schwenkgelenke für die Rotorblätter, bei dem also die Momente aus der Blattschlag- und Blattschwenkbiegung über den Holmteil auf den Rotorkopf übertragen werden und diskrete, relativ weiche Bereiche des Holmteils zur Entlastung der Rotorblätter von diesen Momenten beitragen, wird wegen der aus Steifigkeitsgründen notwendigerweise ungleichen Ausbildung des Holmteils nach Höhe und Breite, naturgemäß eine Verwindung des Holmteils aufgrund von Blattwinkelverstellungen zu einer Änderung der Biegesteifigkeit des Holmteils im betroffenen Bereich vom jeweiligen Blattflügel aus bis zum Anschlußpunkt des Holmteils am Rotorkopf führen. Folglich wirken sich bei diesem Rotor (mit einem gemeinsamen Holmteil je Rotorblattpaar) die Blattwinkelverstellbewegungen auf die Blattschlag- und Blattschwenkbewegungen in der Weise aus, daß sich der fiktive Schlag- und Schwenkgelenkabstand zum Rotorkopf mit der Blattwinkelverstellung ändert. Deshalb ist der Rotor mit dem Nachteil eines indifferenten Schwingungsverhaltens behaftet. Es kann zu starken Vibrationen kommen mit der Folge von hohen Beanspruchungen des Rotors und der Flugzeugzelle.

Der Erfindung liegt die Aufgabe zugrunde, bei einem Rotor der eingangs genannten Art eine gegenseitige Beeinflussung von Blattwinkelverstellbewegungen und Blattschlag-/Blattschwenkbewegungen auszuschließen, ohne mechanische Blattschlag- und Blattschwenkgelenke zu verwenden.

Diese Aufgabe ist mit den kennzeichnenden Merkmalen des Patentanspruchs 1 gelöst, wonach also der gemeinsame Holmteil zwischen zwei Rotorblättern beiderseits des Rotorkopfes jeweils in einen (aufgrund des Trägers) biegeversteiften Bereich hoher Torsionsweichheit für die Blattwinkelverstellbewegungen und in einen rotorkopfseitig biegeweich verbleibenden Bereich geringerer Torsionsweichheit (als der biegeversteifte Bereich) für die Blattschlag-/Blattschwenkbewegungen aufgeteilt ist. Demzufolge sind die Blattwinkelverstellbewegungen und die Blattschlag-/Blattschwenkbewegungen praktisch in getrennten Bereichen des Holmteils wirksam, also voneinander wirkungsmäßig entkoppelt. Darüber hinaus läßt sich zur Verminderung der Verstellkräfte für die kollektiven Blattwinkelbewegungen der durch den Träger überbrückte bzw. biegeversteifte Holmteilbereich optimal torsionsweich ausbilden. Denn der Träger nimmt die aus dem Auftrieb und Widerstand des betreffenden Rotorblattes bzw. Blattflügels resultierenden Momente und Schubkräfte voll auf und überträgt sie über den rotorkopfseitig verbliebenen biegeweichen Holmteilbereich, welcher ausschließlich als Schlag- und Schwenkgelenk fungiert, auf den Rotorkopf. Hierdurch ist ein - üblicherweise nötiges - strukturelles Verstärken des Holmteils, beispielsweise durch Profilierung, hinsichtlich der Blattschlag- und Blattschwenkmomente überflüssig: Die Rotorblattfertigung ist einfacher.

Diese Vorteile werden nachfolgend anhand eines Ausführungsbeispiels der Erfindung weiter verdeutlicht, wobei auch auf ihre in den Unteransprüchen gekennzeichneten, baulich vorteilhaften Weiterbildungen eingegangen wird. Hierzu zeigt die Zeichnung in

- -

Fig. 1 von einem Vierblattrotor eines Drehflügelflugzeuges in der Vertikalen geschnitten den Rotorkopf (nur) mit dem Anschluß eines Rotorblattes von einem Blattpaar mit einem gemeinsamen Holmteil,

Fig. 2 einen Schnitt durch den Blattanschluß nach Schnittlinie II-II der Fig. 1,

Fig. 3 einen Schnitt durch den Blattanschluß nach Schnittlinie III-III der Fig. 1.

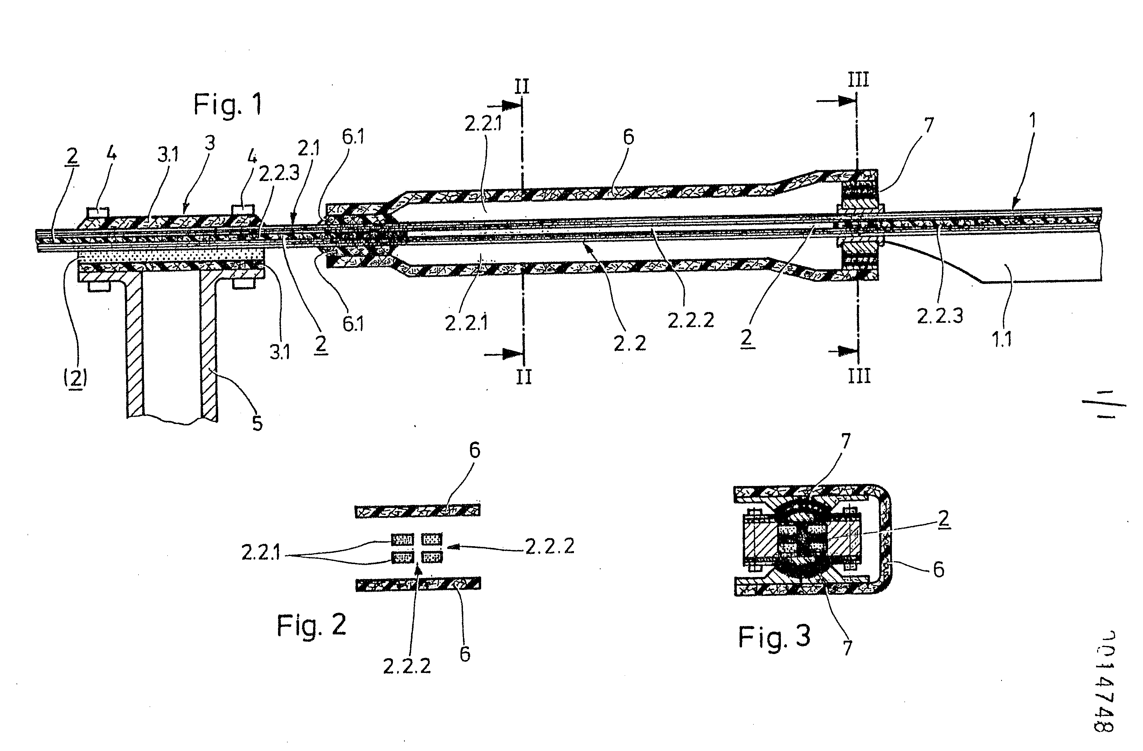

Bei dem Rotor, von dessen vier Rotorblättern /nur eines /in Fig. 1 - um einen Blatteinstellwinkel gegenüber der Normalebene gedreht - angedeutet ist, sind jeweils die beiden einander diametral gegenüberliegenden Rotorblätter über einen gemeinsamen Holmteil 2 zu einem integralen Bauteil vereinigt. Beispielsweise bestehen die Rotorblätter 1 und der zugehörige Holmteil 2 aus faserverstärktem Kunststoff mit in Blattlängsrichtung sich erstreckenden Fasersträngen, die je Bauteil bzw. Rotorblattpaar von der Blattspitze des einen Rotorblattes zur Blattspitze des anderen Rotorblattes verlaufen und im Bereich zwischen den beiden Blattflügeln 1.1 den gemeinsamen einstückig durchgehenden Holmteil 2 bilden. Bei einem derartigen - insoweit durch die DE-OS 27 01 519 bekannten - Rotorblattpaar ist der gemeinsame Holmteil 2 sowohl hinsichtlich der Blattwinkelbewegungen torsionsweich als auch hinsichtlich der Blattschlag- und Blattschwenkbewegungen biegeweich. Für diese Blattbewegungen bedarf es also keiner gesonderten mechanischen Gelenke.

Wie des weiteren Fig. 1 zeigt, ist der gemeinsame Holmteil 2 des jeweiligen Rotorblattpaares im Rotorkopf 3 unbeweglich eingespannt, z.B. mittels einer Schraubverbindung 4 mit der Rotorwelle 5 unter Zwischenfügung von fasergewebeverstärkten (steifen)Kunststoffplatten 3.1. Außerdem ist für den jeweiligen Holmteilabschnitt zwischen dem Rotorkopf 3 und der anschließenden Blattflügel 1.1 ein, z.B. auch aus fasergewebeverstärktem Kunststoff bestehender, biegesteifer Träger 6 vorgesehen. Dieser hüllenartige Träger 6 hat zum einen die Funktion, dem Rotorkopf 3 bzw. der dortigen Holmteileinspannung gegenüber einen biegeweichen Bereich 2.1 des Holmteils 2 zu begrenzen. Hierzu ist der biegesteife Träger 6 an der durch die jeweils gewünschte Länge des biegeweichen Holmteilbereiches 2.1 bestimmten Stelle, z.B. über eine Schraubverbindung unter Zwischenfügung zweier fasergewebeverstärkter Kunststofflagen 6.1, mit dem Holmteil 2 starr verbunden und erstreckt sich bis zu dem anschließenden Blattflügel 1.1 bzw. einer hier ebenfalls mit dem Holmteil hergestellten Verbindung. Diese zweite blattflügelseitige Verbindung mittels eines Radialelastomerlagers 7 ist (folglich) aber, im Gegensatz zu der ersten rotorkopfseitigen Verbindung zwischen dem Träger 6 und Holmteil 2 (mittels der steifen Kunststofflagen 6.1), bloß in radialer Richtung steif. Denn der Träger 6 soll neben seiner (durch die gewählte Anordnung erzielten) Funktion der Biegeversteifung des Holmteils 2 im Bereich vom Blattflügel 1.1 aus bis zu dem rotorkopfseitig freigegebenen biegeweichen Bereich 2.1 zugleich die Funktion einer Brücke in Bezug auf einen in jenem biegeversteiften Holmteilbereich geschaffenen Bereich 2.2 von wesentlich höherer Torsionsweichheit als der freigegebene biegeweiche Bereich 2.1 erfüllen. Die Folge insgesamt ist, daß zum einen dieser blattflügelseitige torsionsweichere Holmteilbereich 2.2 durch den Träger 6 von jeglichen Momenten aus der Blattschlag- und Blattschwenkbiegung freigehalten wird, während zum anderen aufgrund der höheren Torsionsweichheit dieses Holmteilbereiches 2.2 der vom Träger 6 bis zum Rotorkopf 3 bzw. der dortigen Holmteileinspannung freigegebene biegeweiche Holmteilbereich 2.1 von den Blattwinkelverstellbewegungen praktisch unbeeinflußt bleibt, aber die Blattschlag- und Blattschwenkbiegemomente auf den Rotorkopf 3 überträgt.

Die bei dem vorbeschriebenen Blattanschluß bewirkte Entkopplung der Blattschlag-/Blattschwenkbewegungen von den praktisch nur im torsionsweicheren Holmteilbereich 2.2 wirksamen Blattwinkelverstellbewegungen ermöglicht, wie eingangs
bereits erwähnt, eine hinsichtlich der Blattwinkelverstellung optimal torsionsweiche Ausbildung des betreffenden
Holmteilbereiches 2.2. So kann, wie insbesondere Fig. 2
zeigt, dieser Holmteilbereich 2.2 in einzelne Stränge 2.2.1
aufgespalten werden, vorzugsweise durch eine Aufspaltung
mittels zweier Längsspalte 2.2.2 in den beiden Längsmittelebenen des Holmteilbereiches. Die Längsspalte 2.2.2 werden -
auch unter dem Kriterium optimaler Torsionsweichheit des
Holmteilbereiches 2.2 - zweckmäßig von solcher Weite sein,
daß unter einer Verdrillung der Stränge 2.2.1 (infolge einer
Blattwinkelverstellung) eine gegenseitige Berührung ausgeschlossen ist. Anstelle einer Aufspaltung des Holmteiles 2
bloß in einem Bereich 2.2 des biegesteifen Trägers 6/kann gemäß Fig. 1 u.
ebenso vorgesehen sein, daß der Holmteil 2 durchgehend
von dem einen Blattflügel 1.1 bis zu dem anderen (nicht
dargestellten) Blattflügel (des zweiten Rotorblattes) in
einzelne Stränge aufgespalten und, mit Ausnahme des hochtorsionsweich gewünschten Holmteilbereiches 2.2, durch
Füllmaterial/in²den Längsspalten zwischen den Strängen 2.2.1
biegeversteift ist. Bei dieser fertigungstechnisch vorteilhaften Konzeption des Holmteils 2, welcher durch das Füll-
material/natürlich nicht (völlig) biegesteif wird bzw. werden soll, können sich zwischen den Strängen/beispielsweise
kunstharzgetränkte Gewebelagen befinden.

Schließlich ist zu der blattflügelseitigen drehwinkelbeweglichen Verbindung zwischen dem Holmteil 2 und Träger 6 hervorzuheben, daß hierfür ein Radialelastomerlager 7 deshalb gewählt worden ist, weil es ein achsiales Spiel des Holmteils 2 gegenüber dem biegesteifen Träger 6 zuläßt. Das ist aus Gründen der sogenannten Fliehkraftlängung des Holmteils 2 (unter der Wirkung der Blattfliehkräfte) von Vorteil. Im übrigen läßt sich bei einer Teilung des Radialelastomerlagers 7 in der Blattschlag- oder Blattschwenkebene in zwei Hälften (vgl. Fig. 3) der Einbau ohne Maßnahmen am Holmteil 2 durchführen, die seine Struktur ändern.

Der gegenüber dem Holmteil 2 von den Blattfliehkräften freie Träger 6 kann aus aerodynamischen Gründen zumindest annähernd die Form einer Hülle des Holmteils 2 haben. Aus Gründen einer einfachen Montage wäre aber gemäß Fig. 3 diese (Träger-) Hülle an einer ihrer beiden zur Rotorebene senkrechten Längsseiten durchgehend offen auszubilden, um sie auf den Holmteil 2 seitlich aufsetzen zu können. Eine beiderseits offene Ausbildung des Trägers 6, gemäß Fig. 2 nur im Bereich zwischen seinen beiden Verbindungen mit dem Holmteil 2, wird sich unter dem Kriterium verminderter Steuerkräfte für die kollektive Blattwinkelverstellung vorteilhaft auswirken.

Letztlich bleibt auf den beträchtlichen Vorteil der vorbeschriebenen Konzeption eines Blattanschlusses am Rotorkopf hinzuweisen, daß der Blattsteuerhebel ein Bestandteil des jeweiligen Rotorblattes 1 sein kann, beispielsweise über eine Verbindung einerseits mit dem Blattflügel 1.1 und andererseits, drehwinkelbeweglich, mit dem biegesteifen Träger 6.

MESSERSCHMITT-BÖLKOW-BLOHM
  GESELLSCHAFT
MIT BESCHRÄNKTER HAFTUNG,
    MÜNCHEN

Ottobrunn, 22. Januar 1978
BT01 Hb/th

8464

EP 0014748

- 7 -

Rotor für ein Drehflügelflugzeug mit einem gemeinsamen
Holmteil je Rotorblattpaar

P a t e n t a n s p r ü c h e

1. Rotor für ein Drehflügelflugzeug mit einer geraden Anzahl von
Rotorblättern, die am Rotorkopf paarweise einander diametral
gegenüberliegend je Rotorblattpaar über einen gemeinsamen,
von der einen bis zu der anderen Blattwurzel einstückig durchgehenden Holmteil angeordnet sind, welcher sowohl hinsichtlich der Blattwinkelbewegungen torsionsweich als auch hinsichtlich der Blattschlag- und Blattschwenkbewegungen biegeweich ist, dadurch g e k e n n z e i c h n e t , daß der
einstückig durchgehende /Holmteil (2) zum einen im Rotorkopf (3) unbeweglich eingespannt und zum anderen beiderseits des Rotorkopfes
jeweils mit einem Bereich (2.2) von höherer Torsionsweichheit
als der übrige Holmteil sowie mit einem vom Blattflügel (1.1)
aus diesen Bereich (2.2) überbrückenden, biegesteifen Träger (6) versehen ist, welcher, blattflügelseitig mit dem
Holmteil (2) in drehwinkelbeweglicher Verbindung (Radialelastomerlager 7), rotorkopfseitig mit dem Holmteil (2) an einer solchen Stelle starr verbunden ist (Kunststofflagen 6.1),
daß bis zur Einspannung des Holmteils (2) im Rotorkopf (3)
noch ein biegeweicher Bereich (2.1) des Holmteils für die
Blattschlag- und Blattschwenkbewegungen verbleibt.

— —

2. Rotor nach Anspruch 1, dadurch g e k e n n z e i c h n e t , daß der von dem Träger (6) überbrückte Holmteilbereich in einzelne Stränge (2.2.1) aufgespalten ist.

3. Rotor nach Anspruch 2, g e k e n n z e i c h n e t durch eine Aufspaltung durch zwei Längsspalte (2.2.2) in den beiden Längsmittelebenen des Holmteilbereiches.

4. Rotor nach Anspruch 2 oder 3, g e k e n n z e i c h n e t durch Längsspalte (2.2.2) solcher Weite, daß unter Verdrillung der Stränge (2.2.1) eine gegenseitige Berührung ausgeschlossen ist.

5. Rotor nach Anspruch 1, dadurch g e k e n n z e i c h n e t , daß die drehbewegliche Verbindung über ein Radialelastomerlager (7) hergestellt ist.

6. Rotor nach Anspruch 5, dadurch g e k e n n z e i c h n e t , daß das Radialelastomerlager (7) in der Blattschlag- oder Blattschwenkebene in zwei Hälften geteilt ist.

7. Rotor nach Anspruch 1, dadurch g e k e n n z e i c h n e t , daß der Träger (6) zumindest annähernd die Form einer Hülle des Holmteils (2) hat.

8. Rotor nach Anspruch 7, dadurch g e k e n n z e i c h n e t , daß die (Träger-) Hülle zumindest an einer ihrer beiden zur Rotorebene senkrechten Längsseiten durchgehend offen ausgebildet ist.

9. Rotor nach Anspruch 1, dadurch g e k e n n z e i c h n e t , daß der Holmteil durchgehend von dem einen Blattflügel/(1.1) bis zu dem anderen Blattflügel in einzelne Stränge/(2.2.1) aufgespalten und, mit Ausnahme des Bereiches/(2.2) höherer Torsionsweichheit, durch Füllmaterial/(2.2.3) in den Längsspalten zwischen den Strängen biegeversteift ist.

- -

Fig. 1

Fig. 2

Fig. 3